# EUROPEAN PATENT APPLICATION

(11) **EP 4 478 566 A1**
(43) Date of publication of application: **18.12.2024**
(21) Application number: 24176725.0
(22) Date of filing: 17.05.2024
(51) Int. Cl.: H02B 13/045

(54) **GAS TANK FOR SWITCHGEAR, ASSEMBLY METHOD AND SWITCHGEAR**

(30) Priority: 16.06.2023 CN 202310725474
(71) Applicant: ABB SCHWEIZ AG, 5400 Baden (CH)
(72) Inventor: HUANG, Liqun, Xiamen, Fujian, 361015 (CN); ZHUANG, Genhuang, Xiamen, Fujian, 361008 (CN); JIA, Sheng, Xiamen, Fujian, 361000 (CN); XIAO, Weicong, Xiamen, Fujian, 361000 (CN)
(74) Representative: Zimmermann & Partner Patentanwälte mbB

(57) **Abstract**

The present disclosure relates to a gas tank for a switchgear, assembling method and switchgear. A gas tank (1) for a switchgear, includes: a front wall (10), a rear wall (20) opposite to the front wall (10), a top wall (30), a bottom wall (40) opposite to the top wall (30) and a pair of side walls (51, 52), for forming a chamber (100), each side wall of the pair of side walls (51, 52) being attached to side edges of the front wall (10), the rear wall (20), the top wall (30) and the bottom wall (40), where each wall of the front wall (10), the rear wall (20), the top wall (30) and the bottom wall (40) includes bent portions (11, 21, 31, 41), the bent portions (11, 21, 31, 41) being arranged on opposite sides of the front wall (10), of the rear wall (20), of the top wall (30) and of the bottom wall (40) respectively and adjacent to the side edges and the bent portions (11, 21, 31, 41) being folded from the body portions (12, 22, 32, 42) of the front wall (10), the rear wall (20), the top wall (30) and the bottom wall (40), and where the front wall (10), the rear wall (20), the top wall (30) and the bottom wall (40) are configured to be mounted in place by means of a connection portion between each wall of the front wall (10), the rear wall (20), the top wall (30) and the bottom wall (40) and the bent portion (11, 21, 31, 41) of a wall adjacent to the wall. With such design, the structural strength of the gas tank (1) of the switchgear can be significantly improved.

## Description

### FIELD

Embodiments of the present disclosure generally relate to a switchgear, in particular a gas tank for a switchgear.

### BACKGROUND

For a gas-insulated switchgear (GIS), a gas such as sulfur hexafluoride (SF₆) or the like is typically used as an insulating medium to fill the gas tank. However, such gas is harmful to the environment. Attempts have been made to replace the harmful gas with an environment-friendly gas although the insulation performance of the environment-friendly gas may not be as good as that of SF₆ or the like. Due to the difference in insulation performance, the environment-friendly gas needs to be preserved at a higher pressure level (e.g. 8 bar) than SF₆ or the like, to meet the insulation performance requirement of the GIS. The structural strength of the existing gas tank for the GIS cannot meet the requirement for a higher pressure level, thus leading to failure at replacing SF₆ with an environment-friendly gas.

In addition, although there exist schemes for improving the structural strength of the gas tank by arranging reinforcements, such reinforcement arrangement not only makes the process of manufacturing the gas tank complicated, but also is time-consuming.

### SUMMARY

The present disclosure is aimed to solve one or more of the above-mentioned problems and/or other potential problems.

first aspect, there is provided a gas tank for a gas-insulated switch gear, the gas tank comprising:
a front wall, a rear wall opposite to the front wall, a top wall, a bottom wall opposite to the top wall and a pair of side walls, for forming a chamber, each side wall of the pair of side walls being attached to side edges of the front wall, the rear wall, the top wall and the bottom wall,
wherein each of the front wall, the rear wall, the top wall and the bottom wall comprises bent portions, the bent portions being arranged on opposite sides of the front wall, of the rear wall, of the top wall and of the bottom wall respectively and adjacent to the side edges and the bent portions being folded from the body portions of the front wall, the rear wall, the top wall and the bottom wall, and
wherein the front wall, the rear wall, the top wall and the bottom wall are configured to be mounted in place by means of a connection portion between each of the front wall, the rear wall, the top wall and the bottom wall and the bent portion of a wall among the front wall, the rear wall, the top wall and the bottom wall adjacent to the wall.

With such design, the gas tank of the switchgear has a significantly increased structural strength, and can be assembled easierly, benefit from the overlap design in the connection portion.

According to one or more embodiments, each side wall of the pair of side walls comprises corner portions located on an outer side of the chamber, and each of the corner portions is configured to be connected to the bent portion of one of the front wall, the rear wall, the top wall and the bottom wall, to form an L-shaped support structure observed in a direction parallel to the side wall, on the outer side of the chamber with the bent portion. In this way, the structural strength of the gas tank for the switchgear can be further increased.

According to one or more embodiments, the connection portion between the bent portion of each wall of the front wall, the rear wall, the top wall and the bottom wall and the bent portion of a wall adjacent to the wall comprises an overlapping portion between the bent portion of the wall and the bent portion of the wall adjacent thereto. In this way, the structural strength of the gas tank for the switchgear can be further increased.

According to one or more embodiments, an angle included between the bent portion of at least one wall of the front wall, the rear wall, the top wall and the bottom wall and the body portion of the wall is greater than 90 degrees.

According to one or more embodiments, a ratio of the length of the bent portion of the front wall to the length of the body portion of the front wall is 2%-20%, preferably 4-13%.

According to one or more embodiments, a ratio of the length of the bent portion of the top wall to the length of the body portion of the top wall is 2%-20%, preferably 4%-13%.

According to one or more embodiments, a ratio of the length of the bent portion of the rear wall to the length of the body portion of the rear wall is 2%-20%, preferably 4%-13%.

According to one or more embodiments, a ratio of the length of the bent portion of the bottom wall to the length of the body portion of the bottom wall is 10%-50%.

According to one or more embodiments, the size of the side walls is designed such that the side walls attached to the front wall, the rear wall, the top wall and the bottom wall extend beyond the front wall, the rear wall, the top wall and the bottom wall to a distance. The distance can be determined based on the thickness of the plate forming the side walls. Preferably, the distance is equal to the thickness of the plate forming the side walls.

According to one or more embodiments, the body portion of the bottom wall comprises a first portion, a second portion and a third portion which form a stepped structure observed in a direction perpendicular to the side wall.

According to one or more embodiments, a ratio of the length of the bent portion on the first portion of the bottom wall to a length of the first portion of the bottom wall is 6%-50%, and a ratio of the length of the bent portion on the third portion of the bottom wall to a length of the third portion of the bottom wall is 4%-33%.

According to one or more embodiments, a curved portion is arranged between the first portion and the second portion, and a curved portion is also arranged between the second portion and the third portion.

According to one or more embodiments, the gas tank further comprises rods which connected to the pair of side walls.

According to one or more embodiments, at least one of the front wall, the rear wall, the top wall and the bottom wall comprises a plurality of plates, wherein adjacent plates of the plurality of plates are connected by bent portions arranged at edges of the plates.

In a second aspect, there is provided a method for assembling the gas tank for the gas-insulated switchgear, comprising:
providing a front wall, a rear wall opposite to the front wall, a top wall, a bottom wall opposite to the top wall and a pair of side walls, for forming a chamber, wherein each wall of the front wall, the rear wall, the top wall and the bottom wall comprises bent portions, the bent portions being arranged on opposite sides of the front wall, of the rear wall, of the top wall and of the bottom wall respectively and adj acent to the side edges and the bent portions being folded from the body portions of the front wall, the rear wall, the top wall and the bottom wall,
mounting the front wall, the rear wall, the top wall and the bottom wall in place by means of a connection portion between the bent portion of each wall of the front wall, the rear wall, the top wall and the bottom wall and the bent portion of a wall among the front wall, the rear wall, the top wall and the bottom wall adjacent to the wall, and
connecting at the side edges of the front wall, the rear wall, the top wall and the bottom wall, each side wall of the pair of side walls to the front wall, the rear wall, the top wall and the bottom wall, to form the gas tank.

In a third aspect, there is provided a gas tank for a gas-insulated switchgear, comprising:
a front wall, a rear wall opposite to the front wall, a top wall, a bottom wall opposite to the top wall and a pair of side walls, for forming a chamber, each side wall of the pair of side walls being attached to side edges of the front wall, the rear wall, the top wall, and the bottom wall,
wherein each wall of the front wall, the rear wall, the top wall and the bottom wall comprises bent portions, the bent portions being arranged on opposite sides of the front wall, of the rear wall, of the top wall and of the bottom wall respectively and adjacent to the side edges, wherein the bent portions of the front wall, the top wall and the bottom wall are folded from body portions of the front wall, the top wall and the bottom wall, a bent portion of the rear wall is folded from a side portion of the rear wall, and the side portion extends transversely to the body portion of the rear wall, and
wherein the front wall, the rear wall, the top wall and the bottom wall are configured to be mounted in place by means of a connection portion between the bent portion of each wall of the front wall, the rear wall, the top wall and the bottom wall and the bent portion of a wall among the front wall, the rear wall, the top wall and the bottom wall adjacent to the wall.

In a fourth aspect, there is provided a gas tank for a gas-insulated switchgear, comprising:
a front wall, a rear wall opposite to the front wall, a top wall, a bottom wall opposite to the top wall and a pair of side walls, for forming a chamber, each side wall of the pair of side walls being attached to side edges of the front wall, the rear wall, the top wall and the bottom wall,
wherein each of the front wall, the rear wall and the top wall comprises bent portions, the bent portions being arranged on opposite sides, of the front wall, of the rear wall and of the top wall respectively and adjacent to the side edges and the bent portions being folded from body portions of the front wall, the rear wall and the top wall,
wherein the front wall, the rear wall and the top wall are configured to be mounted in place by means of a connection portion between the bent portion of each wall of the front wall, the rear wall and the top wall and the bent portion of a wall among the front wall, the rear wall and the top wall adjacent to the wall, and
wherein a body portion of the bottom wall is connected to the bent portion or the body portion of the front wall.

In one or more embodiments, the bottom wall comprises a bent portion folded from the body portion of the bottom wall and configured to be connected to the bent portion of the rear wall.

In a fifth aspect, there is provided a switchgear, comprising the gas tank for the switchgear as described in the first, third or fourth aspect, or being formed by performing the method for assembling a gas tank of the switchgear as described in the second aspect.

These and other elements will be readily understood and be elucidated by reference to the attached drawings and the description of various embodiments of the present disclosure.

### BRIEF DESCRIPTION OF THE DRAWINGS

The above and other objectives, features, and advantages of the present disclosure will become more apparent through the following detailed description with reference to the accompanying drawings. Some exemplary embodiments of the present disclosure will be illustrated in the drawings by way of example, without limitation, where:
Fig. 1 is an exploded view of a gas tank of the switchgear according to some exemplary embodiments of the present disclosure;
Fig. 2 is a perspective view of the bottom wall of the gas tank of the switchgear as shown in Fig. 1;
Figs. 3A-3C is a perspective view of a further example of the bottom wall of the gas tank of the switchgear as shown in Fig. 1, where Fig. 3B is a perspective view of the bottom wall in Fig. 3A after assembled, and Fig. 3C is a partially enlarged view of Fig. 3B;
Fig. 4 is a perspective view of another example of the rear wall and the bottom wall of the gas tank of the switchgear;
Fig. 5 is a three-dimensional view of a gas tank of the switchgear, after assembled, according to some exemplary embodiments of the present disclosure;
Fig. 6 is a perspective view of another example gas tank of the switchgear, after assembled, where only one of a pair of side walls is mounted on the gas tank;
Fig. 7 is a perspective view of the gas tank of the switchgear in Fig. 6; and
Fig. 8 illustrates a front wall, a top wall and a bottom wall included in another example gas tank of theswitchgear.

Throughout the drawings, the same or corresponding reference symbols refer to the same or corresponding components.

### DETAILED DESCRIPTION OF EMBODIMENTS

The subject matter described herein will now be discussed with reference to several exemplary embodiments. These embodiments are discussed only in order to enable those skilled in the art to better understand and thus implement the subject matter described herein, rather than suggesting any limitations on the scope of the subject matter.

As used herein, the term "includes," or "comprises," and its variants are to be read as open-ended terms that mean "includes, but is not limited to." The term "or" is to be read as "and/or" unless the context indicates otherwise. The term "based on" is to be read as "based at least in part on." The term "an exemplary embodiment" or "an embodiment" is to be read as "at least one embodiment." The term "another example" is to be read as "at least one another example."

Unless the context specified or limited otherwise, the terms "connected" and "coupled", as well as other variants thereof, are used in a broad sense and cover a direct and an indirection connection and coupling. In addition, "connected" or "coupled" is not limited to a physical or mechanical connection or coupling. Throughout the context, the same or similar reference symbols refer to the same or similar components. Other definitions, explicit or implicit, may be provided hereinafter.

A GIS is provided with a sealed gas tank that can be filled with an insulating gas, and allow the pressure in the gas tank to reach a certain level, for example, 8 bar. Plates for forming the gas tank of the switchgear should have a certain strength, to prevent the gas tank of the switchgear from being deformed due to a pressure difference between the pressure of the insulating gas inside the gas tank and the atmospheric pressure outside the gas tank .

In the present field, there always exists a need for improving the structural strength of the gas tank of the switchgear by optimizing the shape of each of the plates for forming the gas tank of the switch gear, the connection arrangement between plates and the assembling method.

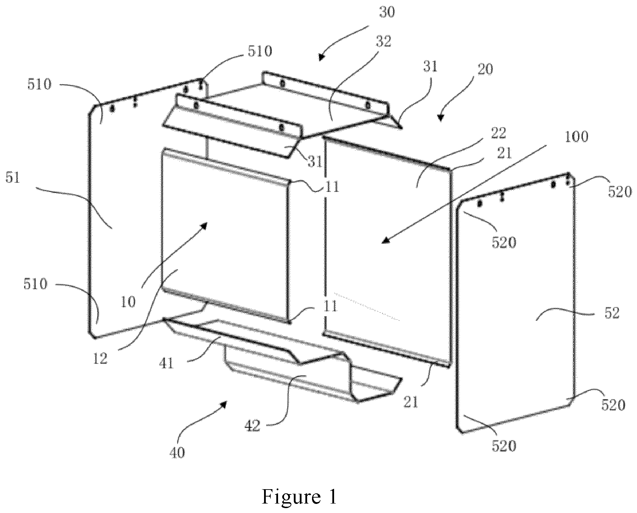

To this end, the present disclosure provides a plurality of embodiments about a gas tank for a GIS switchgear. Although gas tanks for a gas-insulated switchgear and components thereof will be described below in detail with reference to Figs. 1-8, the scope of the present disclosure will not be limited thereto. Various embodiment variants implemented according to the spirit of the present disclosure, after the features of the present disclosure are fully understood, should also be regarded as falling into the scope of the present disclosure. In addition, although the gas tank described herein is mainly used for a gas-insulated switchgear, it could also be applied to form switchgears of other types, even switchgears not with a sealed chamber.

Fig. 1 is an exploded view of a gas tank 1 for a GIS. Referring to Fig. 1, the gas tank includes a front wall 10, a rear wall 20 opposite to the front wall 10, a top wall 30, a bottom wall 40 opposite to the top wall 30 and a pair of side walls 51, 52.

Each of the front wall 10, the rear wall 20, the top wall 30 and the bottom wall 40 of the gas tank 1 may include bent portions 11, 21, 31, 40. Specifically, the bent portions 11, 21, 31, 41 are correspondingly disposed on opposite sides, of the front wall 10, the rear wall 20, the top wall 30 and the bottom wall 40, adjacent to the side edges and folded from body portions 12, 22, 32, 42 of the front wall 10, the rear wall 20, the top wall 30 and the bottom wall 40, for example, folded in a direction towards the inner side of the chamber 100.

As would be appreciated, the front wall, the rear wall, the top wall, the bottom wall and the side wall used herein refer to walls located on different sides of the hollow chamber 100 (for example, the front wall refers to a wall located at the front relative to the hollow chamber 100), rather than necessarily indicating that the front wall, the rear wall, the top wall, the bottom wall or the side wall is only used to form a specified side surface of the hollow chamber 100, or formed of a piece of plate. Further, it should be noted that, when the gas tank is observed from an angle different than that of Figs. 1-8, the terms "front," "rear," "top," "bottom" and "side" for describing orientations may be interchanged to adapt to the orientations of the respective walls of the gas tank observed in the different view. In other words, a bottom wall in an example may refer to the same wall as a top wall in another example.

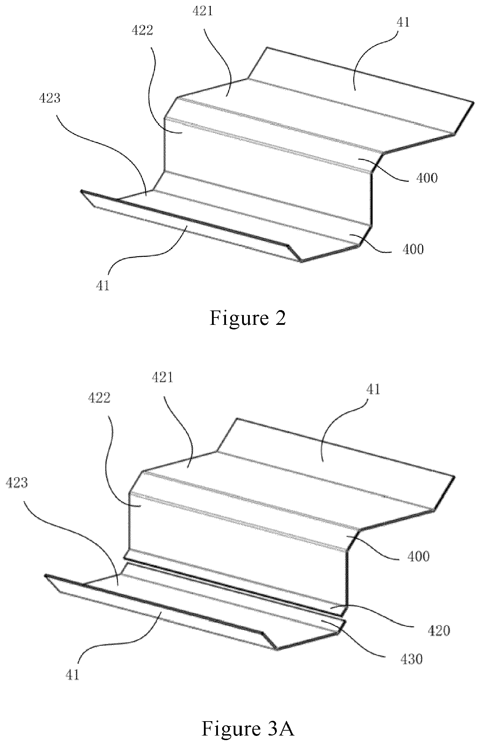

Fig. 2 illustrates in detail the bottom wall 40 of the gas tank of the switchgear, as shown in Fig. 1. In the embodiment shown in Fig. 2, the bottom wall 40 may include a first portion 421, a second portion 422, and a third portion 423, to form a stepped structure observed in a direction perpendicular to the side wall. In the embodiment, the bottom wall 40 may be a single piece, i.e., the bottom wall 40 is formed of a single plate. The bent portions 41 of the bottom wall 40 may be disposed on the first portion 421 and the third portion 423, respectively. The bent portion 41 on the first portion 421 is used to connect to the bent portion 11 of the front wall 10, and the bent portion 41 on the third portion 421 is used to connect to the bent portion 21 of the rear wall 20.

A curved portion 400 may be disposed between the first portion 421 and the second portion 422 of the bottom wall 40, and a curved portion 400 may also be arranged between the second portion 422 and the third portion 423 of the bottom wall 40, to avoid, to a certain extent, stress concentration caused by a great pressure difference, thus preventing deformation from being generated at a transition section between the first portion 421 and the second portion 422 and a transition section between the second portion 422 and the third portion 423.

It is worth noting that, in the illustrated embodiment, the bottom wall 40 is taken as an example to illustrate a wall structure with a stepped structure. In other embodiments, according to the needs in actual use, one or more of the front wall 10, the rear wall 20, the top wall 30 and the side walls 51, 52 may also have a similar stepped structure.

Alternatively, the front wall 10, the rear wall 20, the top wall 30, the bottom wall 40 and the side walls 51, 52 may be formed of a plurality of plates.

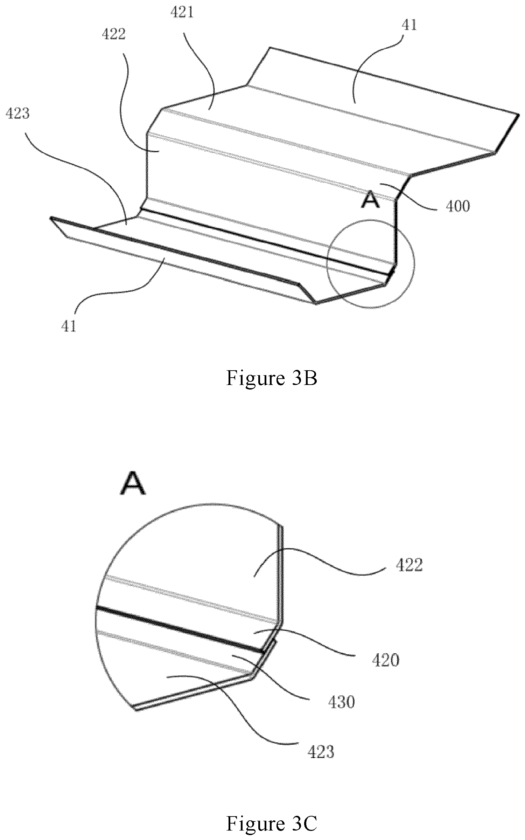

Figs. 3A-3C illustrate another exemplified bottom wall. The bottom wall as shown in Figs. 3A-3C is comprised of two plates, where one plate includes a first portion 421 and a second portion 422 each having a curved portion 400, and the other plate includes a third portion 423. As shown in Fig. 3A, unlike the bottom wall in Fig. 2, the second portion 422 and the third portion 423 on edges of the plates are provided with a bent portion 420, 430, respectively. The bottom wall as shown in Fig. 3B can be obtained by attaching the bent portion 420 and the bent portion 430 at the edges of the plates to each other. As shown in Fig. 3B, the bottom wall which is substantially identical to that in Fig. 2 in terms of structure and appearance can also avoid stress concentration caused by a great pressure difference.

Preferably, the connection portion between the bent portion 420 and the bent portion 430 may include an overlapping portion therebetween. As shown in Fig. 3C which is an enlarged view of the region A in Fig. 3B, a part of the bent portion 420 is arranged on the bent portion 430. In the case, a plate thickness of the region where the part is located is equal to a sum of the plate thickness of the bent portion 420 and the plate thickness of the bent portion 430 such that a great structural strength can be attained at the connection between the second portion 422 and the third portion 433. In a further example, the first portion 421 and the second portion 422 can be connected by means of a similar arrangement, in lieu of the curved portion 400 between the first portion 421 and the second portion 422, such that a great structural strength can be attained at the connection between the first portion 421 and the second portion 422. In the embodiment, the bottom wall is formed of three plates.

Likewise, in the case where the front wall 10, the rear wall 20, the top wall 30 and the side walls 51, 52 have a stepped structure, or are provided with a plurality of folded sections, each of the front wall 10, the rear wall 20 and the top wall 30 may be formed of a plurality of plates with bent portions.

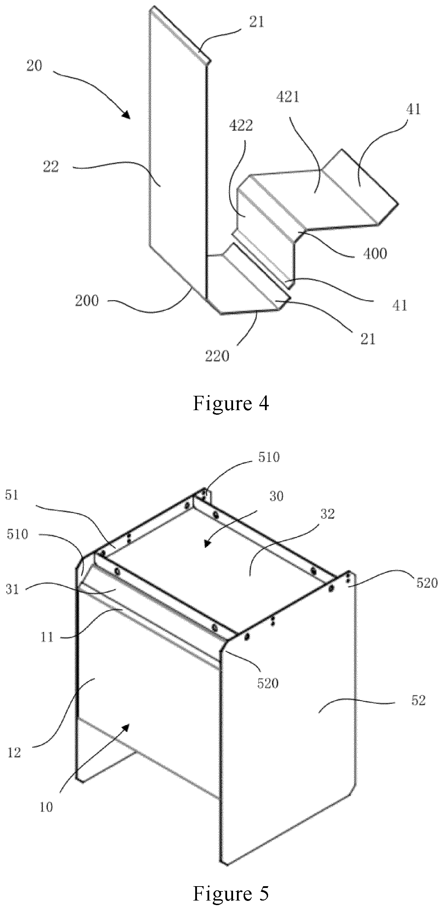

Fig. 4 illustrates another exemplified rear wall 20 and another exemplified bottom wall 40. As compared with the bottom wall shown in Fig. 2, the bottom wall in Fig. 4 may not include a third portion 423, and the bent portion 41 of the bottom wall for attachment to the rear wall 20 may be arranged on the second portion 422. As shown in Fig. 4, the rear wall 20 may further include a side portion 220 extending transversely from the body portion 22. A curved portion 200 is disposed between the side portion 220 and the body portion 22, and one bent portion 21 of the rear wall 20 for attachment to the bent portion 41 of the bottom wall 40 is arranged on the side portion 220. In the case of using such arrangement to assemble the gas tank of the switch gear as shown in Fig. 1, the side portion 200 of the rear wall 20 for attachment to the second portion 422 of the bottom wall can implement the same function as the third portion 423 of the bottom wall 40 as shown in Fig. 2. That is to say, the wall located at the rear side relative to the hollow chamber 100 can be partly used as a portion of the wall at the bottom side relative to the hollow chamber 100, to form a sealed hollow chamber 100.

Likewise, in some embodiments of the present disclosure, this arrangement may also be employed between the front wall 10 and the rear wall 20, between the front wall 10 and the top wall 30, between the rear wall 20 and the top wall 30, and between the front wall 10 and the bottom wall 40.

Returning to Fig. 1, the bent portions 11, 21, 31, 41 may be respectively folded an angle less than 90 degrees relative to the respective body portions 12, 22, 32, 42, such that angles contained between the bent portions 11, 21, 31, 41 and the respective body portions 12, 22, 32, 42 are greater than 90 degrees. In some embodiments, the angles between the bent portions 11, 21, 31, 41 and the respective body portions 12, 22, 32, 42 are 100 degrees, 120 degrees, 135 degrees, 150 degrees, 170 degrees, or any one from the above angles. The angles between the bent portions 11, 21, 31, 41 and the respective body portions 12, 22, 32, 42 may be identical to or different from one another, or some are identical while some others are different.

In addition, length ratios of the bent portions 11, 21, 31, 41 to the front wall 20, the rear wall 20, the top wall 30 and the bottom wall 40 may be changed within a certain range, and could be selected as required. The gas tank volume of the GIS may be varied within a certain range, accordingly. Further, this also makes it possible to design dimensions of the bent portions according to a desired structural strength.

Table 1 shows multiple options for the length of the bent portion and length ratios of the bent portion relative to the respective walls of the gas tank according to the present disclosure.

**Table 1: Set of examples of length ratio of bent portion relative to walls of gas tank**

| No. | Length of bent portion | 500-900 mm length of top wall (bent portion plus body portion) | 500-900 mm length of front wall (bent portion plus body portion) | 700-1200 mm length of rear wall (bent portion plus body portion) | 200-500 mm length of first portion of bottom wall | 300-700 mm length of third portion of bottom wall |
|---|---|---|---|---|---|---|
| 1 | 30 mm | 3-6% | 3-6% | 2-4% | 6-15% | 4-10% |
| 2 | 40 mm | 4-8% | 4-8% | 3-6% | 8-20% | 5-13% |
| 3 | 50 mm | 5-10% | 5-10% | 4-7% | 10-25% | 7-17% |
| 4 | 60 mm | 6-12% | 6-12% | 5-9% | 12-30% | 8-20% |
| 5 | 70 mm | 7-14% | 7-14% | 6-10% | 14-35% | 10-23% |
| 6 | 80 mm | 8-16% | 8-16% | 6-11% | 14-40% | 11-27% |
| 7 | 90 mm | 9-18% | 9-18% | 7-13% | 18-45% | 12-30% |
| 8 | 100 mm | 11-20% | 11-20% | 8-14% | 20-50% | 14-33% |

It would be appreciated that, although the numbered examples show that the front wall 10, the rear wall 20, the top wall 30 and the bottom wall 40 have the bent portions 11, 21, 31, 41 of the same length, bent portions 11, 21, 31 and 41 differing in length may also be used as required for the front wall 10, the rear wall 20, the top wall 30 and the bottom wall 40. For example, in Table 1, the option of 30 mm for the length of the bent portion 31 of the top wall 30 may be combined with the option of 50 mm for the length of the bent portion 11 of the front wall 10. Similarly, in Table 1, the option of 40 mm for the length of the bent portion of the first portion of the bottom wall 40 may be combined with the option of 60 mm for the length of the bent portion of the rear wall 20.

In particular, there is also provided a set of preferred embodiments, where a length ratio of the bent portion of the front wall to the body portion thereof is 2%-20%, a length ratio of the bent portion of the top wall to the body portion thereof is 2%-20%, and a length ratio of the bent portion of the rear wall to the body portion thereof is 2%-20%.

The front wall 10, the rear wall 20, the top wall 30 and the bottom wall 40 may be configured to be mounted in place by means of the connection between the bent portion 11, 21, 31, 41 of each wall of the front wall 10, the rear wall 20, the top wall 30 and the bottom wall 40 and the bent portion 11, 21, 31, 41 of a wall among the front wall 10, the rear wall 20, the top wall 30 and the bottom wall 40 adjacent to the wall. In the embodiment of Fig. 1, the connection between the bent portion 11 of the front wall 10 and the bent portion of the top wall 30 is formed by welding the bent portion 11 and the bent portion 31. Specifically, the connection between the bent portion 11 and the bent portion 31 is formed by welding the bent portion 11 onto the bent portion 31 at the edge where the bent portion 11 meets the bent portion 31. Connections between other bent portions can be formed likewise, to enable the front wall 10, the rear wall 20, the top wall 30 and the bottom wall 40 to be mounted in place.

In addition, the connection between the bent portions 11, 21, 31, 41 further includes an overlapping portion between the bent portions 11, 21, 31, 41. The overlapping portion between the bent portions 11, 21, 31, 41 is arranged similarly to the connection between the bent portion 420 and the bent portion 430 as shown in Fig. 3C. The overlapping portion is defined by the overlapping region between the bent portions. The size of the overlapping region may be determined based on the length of the bent portion.

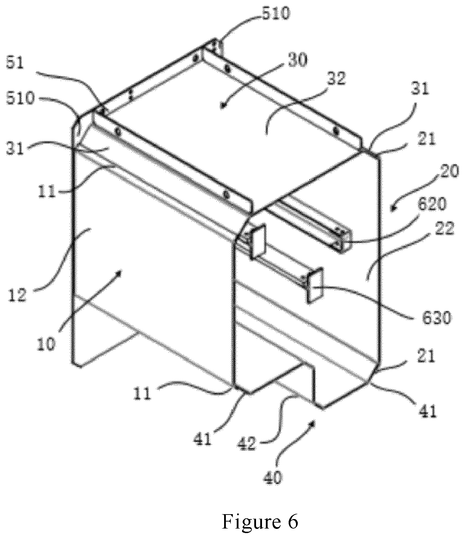

After the front wall 10, the rear wall 20, the top wall 30 and the bottom wall 40 are mounted in place, each side wall of the pair of the side walls 51, 52 is attached to the side edges of the front wall 10, the rear wall 20, the top wall 30 and the bottom wall 40. Figs. 5 and 6 are perspective views of an embodiment gas tank of a switchgear, after assembled. As shown therein, each side wall of the pair of side walls 51, 52 may include corner portions 510, 520 located on an outer side of the chamber 100, where each of the corner portions 510, 520 is configured to be connected to one of the bent portions 11, 21, 31, 41 of one of the front wall 10, the rear wall 20, the top wall 30 and the bottom wall, to form an L-shaped support structure observed in a direction parallel to the side wall, on the outer side of the chamber 100 with the bent portion 11, 21, 31, 41. The L-shaped support structure can further reinforce the structural strength of the gas tank 10 for the switchgear. In addition, the size of the corner portion can also be determined based on the size of the bent portion. The size of the side wall 51, 52 can be designed such that the side wall 51, 52 attached to the front wall 10, the rear wall 20, the top wall 30 and the bottom wall 40 can extend beyond the side edges of the front wall 10, the rear wall 20, the top wall 30 and the bottom wall 40 to a distance which can be determined based on the thickness of the plate forming the side wall 51, 52. With the design, a T-shaped support can be formed to increase the connection strength at the side edge. In an example, the distance is determined to be equal to the thickness of the plate forming the side wall.

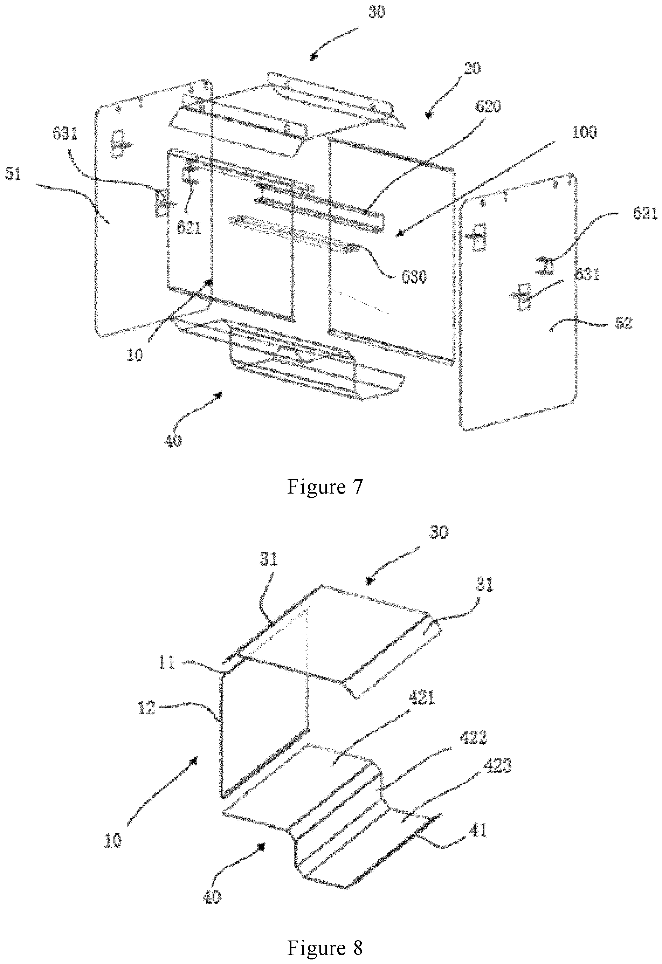

In another embodiment, without limitation, as shown in Figs. 6 and 7, rods 620, 630 may also be arranged inside the gas tank 1 to further increase the structural strength of the gas tank. For example, the rods 620, 630 may be connected to support 621, 631 on the pair of side walls 51, 52, to prevent the side walls 51, 52 from expanding and deforming towards the outside of the hollow chamber. The rods 620, 630 may be elongate rods, or may be elongate connectors each with an I-shaped cross section, or may be both. It has been found that, in a test environment where the gas pressure of the chamber in the gas tank 1 is 4.3 bar, the deformation amount of the side wall is 8.84 mm if the arrangement in Fig. 7 is used , and 24.51 mm if the arrangement in Fig. 1 is used. Therefore, the deformation amount of the side wall 51, 52 is significantly reduced in the gas tank of the switch gear having rods 620, 630 shown in Figs. 6 and 7, as compared with the counterpart shown in Fig. 1.

In addition, some of the front wall 10, the rear wall 20, the top wall 30, the bottom wall 40 and the side walls 51, for example, on the outer or inner side thereof, are provided with stiffeners. Those implementations may be incorporated into the present disclosure, to further increase the structural strength of the gas tank.

In another embodiment, the bottom wall 40 is connected to the body portions 12, 22 of the front wall 10 and the rear wall 20, without bent portion 41 arranged thereon. In this way, the height of the gas tank of the switchgear can be reduced, to meet the loading requirements in a container in terms of dimensions.

Further, inventors have realized that, when the gas tank of the switchgear as shown in Figs. 1-7 are utilized, the respect areas of the body portion 22 of the front wall 10 and the body portion 22 of the rear wall 20 should match the sizes of other devices to be mounted on the front wall 10 and the rear wall 22. In practice, the body portion 22 of the rear wall 20 has a greater area than the body portion 12 of the front wall 10, and thus, when the body portion 12 of the front wall 10 meets the size requirements of other devices to be mounted on the front wall 10, the body portion 22 of the rear wall 20 has sufficient space for other devices to be mounted on the rear wall 20. In some circumstances, even though the area of the body portion 22 of the rear wall 20 is partially reduced, it can still meet the size requirements of other devices to be mounted.

Therefore, in the case of maintaining the area of the body portion 12 of the front wall 10, the overall height of the gas tank of the switchgear can be adjusted by altering the arrangement(s) and size(s) of the bent portion 11 of the front wall 10 and/or the bent portion 41 of the bottom wall 40, and adjusting the respective sizes of the side walls 51, 52 and the rear wall 20 depending on the altered front wall 10 and/or bottom wall 40. Fig. 8 illustrates a front wall 10, a top wall 30 and a bottom wall 40 of an embodiment gas tank of the switchgear. These walls are similar to those described above with reference to Figs. 1-7, and the same reference symbols therefore are used in the description below. As shown in Fig. 8, the front wall 10 and the top wall 30 can be connected via the respective bent portions 11, 31 thereof. However, the difference from the embodiments described above with reference to Figs. 1-7 lies in that: the first portion 421 of the bottom wall 40 is not provided with bent portions, and the only one bent portion 41 of the bottom wall 40 is arranged on the third portion 423 for connecting to the rear wall (not shown). In the embodiment, the first portion 421 of the bottom wall 40 can be directly connected to the body portion 12 of the front wall 10. Alternatively, in the case where the front wall 10 is provided with a bent portion 11 for connecting to the bottom wall 40, the first portion 421 of the bottom wall 40 is directly connected onto the bent portion 11 of the front wall 10. This connection arrangement between the bottom wall 40 and the front wall 10 enables the overall height of the gas tank of the switchgear to be reduced, without affecting the normal use of the front wall 10 for mounting of other devices.

The present disclosure further provides an assembling method, comprising: mounting the front wall 10, the rear wall 20, the top wall 30, and the bottom wall 40 of the gas tank of the gas-insulated switchgear, as described above, by means of the bent portions 11, 21, 31, 41, and thereafter mounting the pair of side walls 51, 52 respectively to side edges of the front wall 10, the rear wall 20, the top wall 30, and the bottom wall 40, to form the gas tank 1.

In addition, the present disclosure further provides a switchgear including the gas tank 1, as described above.

The assembling method and the switchgear also have the advantages described above with respect to the gas tank 1 of the switchgear. Details are omitted herein for brevity.

Although the present disclosure has been described in language specific to structural features and/or methodological acts, it is to be understood that the subject matter specified in the appended claims is not necessarily limited to the specific features or acts described above. Rather, the specific features and acts described above are disclosed as embodiment forms of implementing the claims.

## Claims

1. A gas tank (1) for a gas-insulated switchgear, comprising:
a front wall (10), a rear wall (20) opposite to the front wall (10), a top wall (30), a bottom wall (40) opposite to the top wall (30) and a pair of side walls (51, 52), for forming a chamber (100), each side wall of the pair of side walls (51, 52) being attached to side edges of the front wall (10), the rear wall (20), the top wall (30) and the bottom wall (40), respectively,
wherein each of the front wall (10), the rear wall (20), the top wall (30) and the bottom wall (40) comprises bent portions (11, 21, 31, 41), the bent portions (11, 21, 31, 41) being arranged on opposite sides of the front wall (10), of the rear wall (20), of the top wall (30) and of the bottom wall (40), respectively, and adjacent to the side edges, and the bent portions (11, 21, 31, 41) being folded from the body portions (12, 22, 32, 42) of the front wall (10), the rear wall (20), the top wall (30) and the bottom wall (40), and
wherein the front wall (10), the rear wall (20), the top wall (30) and the bottom wall (40) are configured to be mounted in place by means of a connection portion between each of the front wall (10), the rear wall (20), the top wall (30) and the bottom wall (40) and the bent portion (11, 21, 31, 41) of a wall adjacent to the wall.

2. The gas tank (1) of claim 1, wherein side walls of the pair of side walls (51, 52) each comprises corner portions (510, 520) located on an outer side of the chamber (100), and each of the corner portions (510, 520) is configured to be connected to the bent portion (11, 21, 31, 41) of one of the front wall (10), the rear wall (20), the top wall (30) and the bottom wall (40), to form an L-shaped support structure observed in a direction parallel to the side wall, on the outer side of the chamber (100) with the bent portion (11, 21, 31, 41), particularly wherein the connection portion between the bent portion (11, 21, 31, 41) of each wall of the front wall (10), the rear wall (20), the top wall (30) and the bottom wall (40) and the bent portion (11, 21, 31, 41) of a wall adjacent to the wall comprises an overlapping portion between the bent portion (11, 21, 31, 41) of the wall and the bent portion (11, 21, 31, 41) of the wall adjacent thereto.

3. The gas tank (1) of any one of claims 1-2, wherein an angle between the bent portion of at least one of the front wall (10), the rear wall (20), the top wall (30) and the bottom wall (40) and the body portion of the wall is greater than 90 degrees.

4. The gas tank (1) of any one of claims 1-2, wherein a ratio of a length of the bent portion (11) of the front wall (10) to a length of the body portion (12) of the front wall (10) is 2%-20%.

5. The gas tank (1) of any one of claims 1-2, wherein a ratio of a length of the bent portion (31) of the top wall (30) to a length of the body portion (32) of the top wall (30) is 2%-20%, or wherein a ratio of a length of the bent portion (21) of the rear wall (20) to a length of the body portion (22) of the rear wall (20) is 2%-20%.

6. The gas tank (1) of claim 1, wherein the body portion (42) of the bottom wall (40) comprises a first portion (421), a second portion (422) and a third portion (423) which form a stepped structure observed in a direction perpendicular to the side wall, particularly wherein a ratio of a length of the bent portion (41) on the first portion (421) of the bottom wall (40) to a length of the first portion (421) of the bottom wall (40) is 6%-50%, and a ratio of a length of the bent portion on the third portion (423) of the bottom wall (40) to a length of the third portion (423) of the bottom wall (40) is 4%-33%.

7. The gas tank (1) of claim 2, wherein a size of the side walls (51, 52) is designed such that the side walls (51, 52) attached to the front wall (10), the rear wall (20), the top wall (30) and the bottom wall (40) extend beyond the front wall (10), the rear wall (20), the top wall (30) and the bottom wall (40) to a distance, the distance is determined based on a thickness of a plate forming the side walls (51, 52), particularly wherein the distance is equal to the thickness of the plate forming the side walls.

8. The gas tank (1) of claim 6, wherein a curved portion is arranged between the first portion (421) and the second portion (422), and/or a curved portion is arranged between the second portion (422) and the third portion (423).

9. The gas tank (1) of claim 1-2, further comprising: rods (620, 630) connected to the pair of side walls (51, 52).

10. The gas tank (1) of any one of claims 1-2, wherein at least one of the front wall (10), the rear wall (20), the top wall (30) and the bottom wall (40) comprises a plurality of plates, wherein adjacent plates of the plurality of plates are connected via bent portions (420, 430) arranged at edges of the plates.

11. A method for assembling a gas tank (1) for a gas-insulated switchgear, comprising:
providing a front wall (10), a rear wall (20) opposite to the front wall (10), a top wall (30), a bottom wall (40) opposite to the top wall (30) and a pair of side walls (51, 52) for forming a chamber (100), wherein each wall of the front wall (10), the rear wall (20), the top wall (30) and the bottom wall (40) comprises bent portions (11, 21, 31, 41), the bent portions (11, 21, 31, 41) being arranged on opposite sides of the front wall (10), of the rear wall (20), of the top wall (30) and of the bottom wall (40), respectively, and adjacent to the side edges, and the bent portions (11, 21, 31, 41) being folded from the body portions (12, 22, 32, 42) of the front wall (10), the rear wall (20), the top wall (30) and the bottom wall (40),
mounting the front wall (10), the rear wall (20), the top wall (30) and the bottom wall (40) in place by means of a connection portion between the bent portion (11, 21, 31, 41) of each wall of the front wall (10), the rear wall (20), the top wall (30) and the bottom wall (40) and the bent portion (11, 21, 31, 41) of a wall adjacent to the wall, and
connecting, at the side edges of the front wall (10), the rear wall (20), the top wall (30) and the bottom wall (40), each side wall of the pair of side walls (51, 52) to the front wall (10), the rear wall (20), the top wall (30) and the bottom wall (40), to form the gas tank (1).

12. A gas tank (1) for a gas-insulated switchgear, comprising:
a front wall (10), a rear wall (20) opposite to the front wall (10), a top wall (30), a bottom wall (40) opposite to the top wall (30) and a pair of side walls (51, 52), for forming a chamber (100), each side wall of the pair of side walls (51, 52) being attached to side edges of the front wall (10), the rear wall (20), the top wall (30) and the bottom wall (40), respectively,
wherein each wall of the front wall (10), the rear wall (20), the top wall (30) and the bottom wall (40) comprises bent portions (11, 21, 31, 41), the bent portions (11, 21, 31, 41) being arranged on opposite sides of the front wall (10), the rear wall (20), the top wall (30) and the bottom wall (40), respectively, and adjacent to the side edges, wherein the bent portions (11, 31, 41) of the front wall (10), the top wall (30) and the bottom wall (40) are folded from body portions (12, 22, 32) of the front wall (10), the top wall (30) and the bottom wall (40), one bent portion (22) of the rear wall (20) is folded from a side portion (220) of the rear wall (20), and the side portion (220) extends transverse to the body portion (22) of the rear wall (20), and
wherein the front wall (10), the rear wall (20), the top wall (30) and the bottom wall (40) are configured to be mounted in place by means of a connection portion between the bent portion (11, 21, 31, 41) of each wall of the front wall (10), the rear wall (20), the top wall (30) and the bottom wall (40) and the bent portion (11, 21, 31, 41) of a wall adjacent to the wall.

13. A gas tank (1) for a gas-insulated switchgear, comprising:
a front wall (10), a rear wall (20) opposite to the front wall (10), a top wall (30), a bottom wall (40) opposite to the top wall (30) and a pair of side walls (51, 52), for forming a chamber (100), each side wall of the pair of side walls (51, 52) being attached to side edges of the front wall (10), the rear wall (20), the top wall (30) and the bottom wall (40), respectively,
wherein each wall of the front wall (10), the rear wall (20) and the top wall (30) comprises bent portions (11, 21, 31), the bent portions (11, 21, 31) being arranged on opposite sides of the front wall (10), of the rear wall (20) and of the top wall (30), respectively and adjacent to the side edges, and the bent portions (11, 21, 31) being folded from body portions (12, 22, 32) of the front wall (10), the rear wall (20) and the top wall (30), and
wherein the front wall (10), the rear wall (20) and the top wall (30) are configured to be mounted in place by means of a connection portion between the bent portion (11, 21, 31) of each wall of the front wall (10), the rear wall (20) and the top wall (30) and the bent portion of a wall adjacent to the wall, and
wherein a body portion (42) of the bottom wall (40) is connected to the bent portion (11) or the body portion (12) of the front wall (10).

14. The gas tank (1) of claim 13, wherein the bottom wall (40) comprises a bent portion (41) folded from the body portion (42) of the bottom wall (40) and configured to be connected to the bent portion (21) of the rear wall (20).

15. A gas-insulated switchgear, comprising:
the gas tank (10) for a switchgear of any one of claims 1-10 and 12-14.
